# EUROPÄISCHE PATENTSCHRIFT

(11) **EP 2 138 914 B1**
(45) Veröffentlichungstag und Bekanntmachung des Hinweises auf die Patenterteilung: **30.12.2020**
(21) Anmeldenummer: 09006564.0
(22) Anmeldetag: 15.05.2009
(51) Int. Cl.: G05B 19/042, G05B 19/409, G05B 19/4068, G05B 19/4069

(54) **Verfahren und Vorrichtung zur Optimierung, Überwachung oder Analyse eines Prozesses**
Method and device for optimising, monitoring or analysing a process
Procédé et dispositif d'optimisation, de surveillance ou d'analyse d'un processus

(30) Priorität: 27.06.2008 DE 102008030159; 10.01.2009 DE 102009004285
(43) Veröffentlichungstag der Anmeldung: 30.12.2009
(73) Patentinhaber: Robert Bosch GmbH, 70442 Stuttgart (DE)
(72) Erfinder: Landgraf, Günther, 97753 Karlstadt (DE)

(56) Entgegenhaltungen:
- EP-A2- 1 189 123
- EP-A2- 1 557 797
- DE-A1- 4 028 332
- DE-A1- 4 039 506
- US-A1- 2004 176 864

## Beschreibung

Die Erfindung betrifft ein Verfahren zur Überwachung und/oder zur Analyse eines auf einer automatisierten Einrichtung ablaufenden Prozesses.

Bei der Einrichtung kann es sich beispielsweise um eine Einrichtung zu Automatisierungs- oder Überwachungszwecken handeln. Beispielsweise könnte die Einrichtung eine Bearbeitungsmaschine zur Bearbeitung eines Werkstückes oder zur Montage von Werkstückkomponenten sein, insbesondere könnte es sich bei der Einrichtung auch um eine Werkzeugmaschine handeln.

Im Rahmen des Betriebs von Prozessen sind häufig sehr große Datenmengen zu bearbeiten und zu verarbeiten. Diese Datenmengen müssen schnell erfasst und hinsichtlich ihrer Auswirkungen auf das Prozessergebnis, beispielsweise ein zu fertigendes Werkstück, beurteilt werden können. Ziel der Erfindung ist es, den Prozess hinsichtlich verschiedenster Kriterien, wie beispielsweise der Fertigungsgenauigkeit, der Fertigungsgeschwindigkeit, des Energieverbrauches, der Taktzeiten, der Prozeßstabilität und/oder Prozeßsicherheit, der beteiligten intelligenten Teilsysteme bzw. der Maschinenkomponenten zu überwachen und/oder zu optimieren und/oder zu analysieren.

Aus der US-Patentschrift 6,678,636 B1 geht ein sogenannter "Cycle Time Analyzer" hervor, welcher eine Überwachung von Maschinenzyklen ermöglicht. Hiermit ist es möglich, Maschinenzustände rückwirkend zu analysieren. Der Maschinenbetreiber erhält damit ein Werkzeug zur Aufdeckung von Fehlern und zur Optimierung der Maschinenprozesse. Dies hilft, die Herstellkosten zu reduzieren und die Produktqualität zu verbessern. Allerdings beschränkt sich die Funktionalität auf eine reine Maschinenzyklusanalyse.

Die EP 1 189 123 A2 zeigt eine Vorrichtung zum automatischen Erstellen und zur Simulation eines NC-Programmcodes. In einem Programmier-Bereich wird ein NC-Programmcode erstellt. In einem Simulations-Bereich wird ein Ablauf des NC-Programmcodes simuliert und auf einem Bildschirm ausgegeben. Aufgrund der Ergebnisse der Simulation des NC-Programmcode kann der NC-Programmcode geändert und erneut simuliert werden.

Die US 2004/176864 A1 zeigt ein Verfahren und eine Vorrichtung zur Datenverarbeitung eines Herstellungsprozesses. Dabei werden Daten eines ersten Datentyps mit einem ersten Zeitmarker, einer ersten Quelle des Herstellungsprozesses und einem Identifikationswert verknüpft. Daten eines zweiten Datentyps werden mit einem zweiten Zeitmarker und einer zweiten Quelle des Herstellungsprozesses verknüpft. Der Identifikationswert wird auch mit den Daten des zweiten Datentyps verknüpft, wenn die erste und die zweite Quelle des Herstellungsprozesses und erster und zweiter Zeitpunkt übereinstimmen.

Die EP 1 557 797 A2 zeigt ein Anlageninformationssystem und ein Verfahren für ein Anlageninformationssystem, wobei spezielle Prozessinformationsdaten aus einer Vielzahl von zu akquirierenden Prozessinformationsdaten nach bestimmten festgelegten Kriterien selektiert und aufbereitet werden.

Die Erfindung schlägt ein Verfahren zur Überwachung und/oder zur Analyse zumindest eines auf einer automatisierten Einrichtung ablaufenden Prozesses mit den Merkmalen des Anspruchs 1 vor. Unter dem Begriff Prozess kann im Sinne der Erfindung insbesondere auch jeglicher gesteuerte Ablauf oder gesteuerte Vorgang und dergleichen verstanden werden.

Unter Verwendung zumindest eines ersten und eines zweiten Datensatzes wird eine Visualisierung der Datensätze mittels eines Anzeigemittels derart realisiert, dass eine visuelle Querbeziehung zwischen für den Prozess relevanten Abschnitten der Datensätze hergestellt wird. Neben einer reinen Maschinenzyklusanalyse werden hierbei also weitere prozessrelevante Informationen dargestellt, welche mit dem Prozess in unmittelbarem Zusammenhang stehen und einen entscheidenden Einfluss auf das Prozessergebnis haben können.

Das Anzeigemittel umfasst mehrere Teilbereiche, in denen unterschiedlichste auf den Datensätzen basierende Informationen darstellbar sind. Beispielsweise könnten in einem ersten Bereich des Anzeigemittels ein oder mehrere Steuerprogramme ggf. mit Zusatzdaten angezeigt werden. Entsprechend könnten in einem zweiten Bereich des Anzeigemittels bei Bedarf auch mehrere mehrdimensionale Grafiken beispielsweise zur Visualisierung des Prozessergebnisses dargestellt werden.

Diese Vorgehensweise ermöglicht es dem Maschinenbetreiber, schnell zu erkennen, wo im Prozess Schwächen vorliegen, weil mittels der visuellen Querbeziehung zwischen den für den Prozess relevanten Datensätzen sehr schnell ersichtlich wird, wie sich die Datensätze gegenseitig beeinflussen beziehungsweise wie sie voneinander abhängen.

Üblicherweise ist zumindest ein am Prozessablauf beteiligtes intelligentes Teilsystem vorhanden, wobei zumindest ein Datensatz zur Charakterisierung des Zustandes und/oder zur Darstellung zumindest eines Parameters des Teilsystems verwendet wird. Unter einem intelligenten Teilsystem versteht man ein System, welches in der Lage ist teilsystemspezifische Abläufe, beispielsweise mittels eines Steuerprogramms, selbsttätig zu steuern (z.B. Antriebsregler, Steuerung und dergleichen). Hierdurch wird ein Relativbezug, insbesondere mittels einer Zeitbasis, zwischen dem Teilsystem der zu betrachtenden Maschine und einem weiteren prozessrelevanten Datensatz möglich, welcher in unmittelbarem oder mittelbarem Zusammenhang mit dem Teilsystem stehen kann.

Prinzipiell können natürlich auch mehrere intelligente Teilsysteme mit einer gemeinsamen Zeitbasis vorhanden sein, die über eigene Messaufzeichnungseinheiten verfügen. Die hierdurch aufgezeichneten Datensätze könnten ebenfalls visualisiert werden. Des Weiteren ist es auch denkbar, dass Signale aus verschiedenen Datensätzen, die aus unterschiedlichen intelligenten Teilsystemen oder aus einem intelligenten Teilsystem stammen, bei Bedarf in einer Grafik dargestellt werden. So könnten mehrere Signale beispielsweise auf einer Oberfläche in verschiedenen Bereichen angezeigt werden.

Wenn der weitere prozessrelevante Datensatz Daten zur Visualisierung des Prozessergebnisses umfasst, dann könnte beispielsweise ein Querbezug zwischen dem Prozessergebnis und den für die Realisierung des Prozessergebnisses verwendeten Teilsystemen hergestellt werden, um diesen Querbezug mittels des Anzeigemittels zu visualisieren. Vorzugsweise stammt der Datensatz zur Visualisierung des Prozessergebnisses aus einer Simulation unter Verwendung einer virtuellen Einrichtung. Unter Einsparung von Zeit und Kosten kann somit zunächst eine virtuelle Repräsentation des Prozessergebnisses erzeugt werden. Alternativ wäre es auch möglich, dass der Datensatz auf Messungen an einem unter Verwendung einer realen Einrichtung realisierten Prozessergebnis basiert. Diese Messung könnte zum Beispiel Sollpositionen repräsentieren, welche basierend auf der Taktung eines Interpolators beispielsweise einer als Werkzeugmaschine fungierenden Einrichtung aufgezeichnet wurden, wobei das Prozessergebnis das hergestellte Werkstück sein könnte.

Es handelt sich bei dem intelligenten Teilsystem oder den intelligenten Teilsystemen um intelligente virtuelle und/oder reale elektronische Baugruppen (Numerische Steuerung, Motion Steuerung, Antrieb, SPS, Robotersteuerung, Messmaschine, Werkzeugüberwachungseinrichtung etc.). Diese Baugruppen sind in der Lage, Daten unter Verwendung eines teilsystemübergreifenden und einheitlichen Zeitbezuges zu erfassen, zu speichern und für spätere Auswertungen wieder bereitzustellen. Die Datensätze dieser intelligenten Teilsysteme können dann unter Verwendung der hier vorgestellten Erfindung miteinander in Beziehung gebracht werden. In der bevorzugten Anwendung, beispielsweise in Verbindung mit einer Werkzeugmaschine, sind in der Regel als intelligente Teilsysteme eine Numerische Steuerung, eine SPS sowie mehrere Antriebe (eventuell mit integrierter Motion und/oder integrierter SPS) vorhanden. Als den Prozess bestimmendes Steuerprogramm dient in diesem Fall ein NC-Programm mit NC-Sätzen.

Bei dem Steuerprogramm handelt es sich insbesondere um DIN-Code für eine Numerische Steuerung und/oder ein SPS-Programm (insbesondere SPS-Schrittkette) und/oder um eine Roboter- oder Motionsteuerung. Im Rahmen der Visualisierung wird der Programmcode insbesondere in Form von einzelnen Programmcodezeilen in Form von NC-Sätzen oder SPS-Code (z.B. Schritte einer SPS-Schrittkette) zumindest abschnittsweise mittels des Visualisierungsmittels visualisiert.

Die reale/virtuelle Steuerung steuert zusätzlich oder alternativ eine virtuelle Einrichtung an und tauscht Datensätze mit der virtuellen Einrichtung aus, welche Datensätze auch bei der Visualisierung berücksichtigt werden können. Somit können Prozessergebnisse vorab simuliert werden. Das Mischen von Datensätzen ist ebenfalls denkbar. Beispielsweise könnte an einer realen Steuerung eine virtuelle Maschine mit virtuellen Antrieben angeschlossen sein. Auf diese Weise könnten dann Datensätze aus der realen Steuerung mit Datensätzen aus den virtuellen Antrieben in einer Visualisierung zusammentreffen.

Die Anwendung des erfindungsgemäßen Verfahrens besteht nun darin, dass zwischen dem Prozessergebnis (z.B. Werkstück) und dem für die Ausführung des Prozesses (z.B. Herstellung des Werkstückes) erforderlichen Steuerprogramm oder Steuerprogrammen und ggf. noch den auf den einzelnen intelligenten Teilsystemen ermittelten Daten / Signalen ein Bezug hergestellt wird.

Dieser Bezug (in der Regel ein zeitlicher Bezug unter Verwendung einer teilsystemübergreifenden gemeinsamen Zeitbasis) ordnet einzelne Abschnitte des Steuerprogramms oder auch mehrerer Steuerprogramme bestimmten Datensätzen zu, wie etwa einer Bahnkontur (die beispielsweise unter Verwendung der Soll- oder Istpositionen eines Interpolators entstehen könnte). Bei Werkzeugmaschinen entsteht unter Verwendung der interpolatorseitigen Soll- oder Istpositionen automatisch das Werkstück (kartesisches Achssystem vorausgesetzt). Es ist somit leicht feststellbar, welches Steuerungsprogramm bzw. welcher Teil des Steuerprogramms für die Herstellung welcher Bahnen (bei Bearbeitungsmaschinen: welches Teils/Abschnittes der betreffenden Werkstückkontur) verantwortlich und gegebenenfalls zu optimieren ist. Der Nutzen des erfindungsgemäßen Verfahrens besteht nun darin, dass beispielsweise zwischen dem Werkstück und dem für die Herstellung des Werkstückes erforderlichen zumindest einen Steuerprogramm und den auf den einzelnen Teilsystemen ermittelten Daten / Signalen ein Bezug hergestellt wird. Dieser Bezug (in der Regel ein zeitlicher Bezug unter Verwendung einer teilsystemübergreifenden gemeinsamen Zeitbasis) ordnet einzelne Abschnitte des Steuerprogramms oder auch mehrerer Steuerprogramme bestimmten Datensätzen zu, wie etwa einer Bahnkontur (die beispielsweise aus einem Datensatz der Soll- oder Istpositionen des betreffenden Interpolators entsteht). Bei Werkzeugmaschinen entsteht unter Verwendung der interpolatorseitigen Soll- oder Istpositionen automatisch das Werkstück. Es ist somit schnell feststellbar, welches Steuerungsprogramm bzw. welcher Teil des Steuerprogramms für die Herstellung welcher Bahnen (bei Bearbeitungsmaschinen: welcher Teil/Abschnitt der betreffenden Werkstückkontur) verantwortlich und gegebenenfalls zu optimieren ist.

Vorzugsweise werden bezüglich des Steuerprogramms relevante und mittels einer Editiereinrichtung erfasste Änderungen derart im Rahmen des erfindungsgemäßen Verfahrens verarbeitet, dass diese Änderungen unmittelbar und zeitnah auf den Prozessablauf Einfluss nehmen können. Am Steuerprogramm durchgeführte Änderungen können direkt am Anzeigemittel durchgeführt werden und das Steuerprogramm kann unmittelbar danach wieder auf der Steuerung ausgeführt werden. Die Auswirkungen der Änderungen/Optimierungen sind somit beispielsweise an einem virtuell hergestellten Werkstück sofort überprüfbar, spätestens jedoch beim nächsten Steuerprogrammdurchlauf, indem das Prozessergebnis betrachtet wird.

Vorzugsweise wird zumindest ein prozessrelevanter Datensatz mittels eines Messmittels ermittelt und mittels einer Datensammeleinrichtung zum Zwecke der Weiterverarbeitung gesammelt. Der Benutzer hat somit die Möglichkeit, im Rahmen des erfindungsgemäßen Verfahrens gezielt prozessrelevante Daten zu erfassen und darstellen zu lassen. Die Flexibilität bzgl. einer Prozessanalyse wird damit für den Prozessbetreiber sehr hoch.

Der Prozessbetreiber hat die Möglichkeit, das Messmittel an beliebigen Teilsystemen der Maschine anzuschließen bzw. auf einem beliebigen Teilsystem zu starten und dadurch beliebige Betriebsparameter in der Datensammeleinrichtung abzuspeichern. Voraussetzung hierfür ist eine teilsystemübergreifende gemeinsame Zeitbasis. Beispielsweise könnte das Messmittel dazu verwendet werden, die Motorströme von Spindelmotoren einer Werkzeugmaschine innerhalb eines oder mehrerer Antriebe oder auch innerhalb der NC aufzuzeichnen. Vorzugsweise umfasst der mittels des Messmittels erfasste Datensatz antriebsrelevante Messgrößen und/oder Parameter und/oder steuerungsrelevante Messgrößen und/oder Parameter wie Achs- und/oder Spindeldaten, Positionsdaten, Geschwindigkeiten, Drehzahlen, Beschleunigungen, Ruck, Schleppfehler, elektrische Spannung und Strom, mechanisches Drehmoment/Kraft und/oder Drezahl/Geschwindigkeit, Kommunikationsprotokolldaten, Steuerungskanaldaten, und/oder Daten der SPS einschließlich der E/A-Daten (Zustände der verschiedensten Peripheriegeräte, wie etwa eines Hydraulikaggregats), und dergleichen oder daraus ableitbare bzw. berechenbare Daten, wie beispielsweise die Berechnung der elektrischen Energie aus der jeweiligen elektrischen Spannung und des Stroms. Das erfindungsgemäße Verfahren kann nun Querbeziehungen zwischen den oben genannten Messgrößen und beispielsweise einer Werkstückkontur (im Normalfall handelt es sich hierbei ebenfalls um Messgrößen, z.B. alle Sollpositionen des Interpolators) und/oder dem Steuerprogramm herstellen und visualisieren. Sämtliche dieser Messgrößen können damit optimiert und in Relation zum Prozessergebnis (z.B. Werkstück) und/oder Steuerprogramm betrachtet werden.

Die Visualisierung erfolgt unter Verwendung von drei Basissignalen. Als Basissignale werden Signale bezeichnet, die Koordinatenachsen zugeordnet werden und gemeinsam eine 3D-Kontur (z.B. zur mehrdimensionalen Darstellung einer Oberfläche) vorgeben können. Im Bereich Werkzeugmaschinen werden für die 3 Koordinaten bevorzugt die interpolatorseitige Soll- oder Istpositionen ausgewählt, so entsteht automatisch eine 3-dimensionale Werkstückkontur. Damit ergibt sich die Möglichkeit, das Steuerprogramm beziehungsweise die Steuerprogramme entweder in Relation zu einem dreidimensionalen Abbild von Teilsystemparametern oder in Relation zu einem dreidimensionalen Abbild der Werkstückkontur bzw. in Relation von Bewegungsbahnen zu betrachten und Optimierungen am Steuerprogramm bzw. den Steruerprogrammen und/oder der Maschine durchzuführen, so dass die Teilsystemparameter bzw. die Werkstückkonturen innerhalb ihrer zulässigen Toleranzbereiche liegen.

Die Visualisierung erfolgt auch unter Verwendung eines Zusatzsignals, welches zur visuellen Kennzeichnung eines Abschnittes innerhalb der mehrdimensionalen Kontur oder zur Kennzeichnung eines Abschnittes am Visualisierungsmittel verwendet wird und welches von weiteren Datensätzen repräsentiert wird. Es ist damit beispielsweise möglich, auf eine dreidimensionale Werkstückkontur oder sonstige Kontur oder Bewegungsbahn quasi als vierte Dimension die bezüglich eines Teilsystems relevanten Parameter (z.B. Motorströme) auf der Werkstückkontur/Bahn einzublenden, während zusätzlich noch ein visueller Querbezug zum Steuerprogramm bzw. zu den Steuerprogrammen hergestellt wird. Vorzugsweise wird ein Auswahlmittel verwendet, welches zur Auswahl des Zusatzsignals aus einer Vielzahl von Zusatzsignalen dient und diese auswählbaren Zusatzsignale insbesondere hierarchisch gliedert.

Das Verfahren wird bevorzugt unter Verwendung eines Datennetzwerkes, insbesondere eines Intranets und/oder des Internets, durchgeführt. Mittels eines Portals können somit alle Verfahrensmerkmale für einen Fernzugriff beispielsweise in Verbindung mit einer Fernüberwachung (Condition Monitoring) zur Verfügung gestellt werden.

Folgende Verwendungen werden unter anderem für das Verfahren empfohlen:
- Überwachung der Fertigungsgenauigkeit der Einrichtung;
- Taktzeitüberwachung und/oder zur Taktzeitanalyse;
- Energieverbrauchüberwachung und/oder zur Energieverbrauchanalyse;
- Optimierung und/oder Überwachung zumindest eines auf der Einrichtung ablaufenden Prozesses, insbesondere Überwachung bezüglich der Prozeßstabilität und/oder der Prozess-Sicherheit,
- Überwachung und/oder Beurteilung des Einrichtungszustandes;
- Beurteilung des Zustandes von zumindest einem Teilsystem der Einrichtung;
- Beurteilung des Zustandes von zumindest einer Teilkomponente der Einrichtung.

Eine erfindungsgemäße Einrichtung dient vorrangig zur Realisierung einer der oben genannten Verwendungen in Verbindung mit einem auf der Einrichtung ablaufenden Prozess. Bevorzugt handelt es sich bei der Einrichtung um eine Bearbeitungsmaschine oder eine Werkzeugmaschine zur Bearbeitung eines Werkstückes.

Von der Einrichtung ist zumindest ein am Prozessablauf beteiligtes intelligentes Teilsystem (z.B. mit der Fähigkeit Datensätze aufzuzeichnen) und/oder eine Maschinenkomponente (z.B. mechanische Einheiten wie Transportschlitten, Arme und dergleichen) umfasst. Zumindest ein Datensatz dient zur Charakterisierung des aktuellen Zustands des Teilsystems und/oder des zu steuernden Prozesses und/oder der Komponente. Vorzugsweise umfasst zumindest ein Datensatz Daten zur Visualisierung der Zustände des intelligenten Teilsystems und/oder der Komponente am Anzeigemittel, wobei das Aufbereitungsmittel die Aufbereitung der Datensätze übernimmt und wobei dieses Mittel mit dem Anzeigemittel zur Darstellung der aufbereiteten Datensätze verbunden ist. Zusätzlich ist ein Auswahlmittel vorgesehen, welches zur Auswahl zumindest eines Datensatzes aus einer Vielzahl von am Anzeigemittel darstellbaren Datensätzen dient und wobei die Datenaufbereitung unter Berücksichtigung zumindest eines dieser Datensatzes durchführbar ist. Die Datensätze sind in Form einer Abhängigkeitsstruktur gegliedert darstellbar. Die sich daraus ergebenden Vorteile können den bereits in Zusammenhang mit dem Verfahren durchgeführten Erläuterungen entnommen werden. Vorteilhafterweise ist ebenfalls eine Editiereinrichtung vorhanden, mittels derer die Datensätze editierbar und damit schnell änderbar sind.

Es ist weiterhin ein Messmittel zur Erfassung zumindest eines Datensatzes vorgesehen, welches mit dem Datenaufbereitungsmittel zum Datenaustausch in Verbindung steht und welches Messdaten des Prozesses, der steuerungsseitigen Zustände oder von zugeordneten Einrichtungskomponenten erfassen und an das Datenaufbereitungsmittel weiterleiten kann. Sehr flexibel sind somit unterschiedlichste visuelle Querbeziehungen zwischen den Datensätzen herstellbar.

Bei dem Messmittel handelt es sich vorzugsweise um ein Softwaretool zur Aufzeichnung und Visualisierung von prozessrelevanten Daten innerhalb beispielsweise eines intelligenten Teilsystems. Die hierfür erforderlichen Aufzeichnungsmechanismen können weitestgehend innerhalb des Teilsystems (wie beispielsweise einem Antrieb, einer SPS, einer Roboter-Steuerung, einer Messmaschine, eines Werkzeugüberwachungssystems, etc.) realisiert sein und erlauben beispielsweise neben den Abarbeitungszeiten beispielsweise von NC-Sätzen innerhalb der Geometriekette (im wesentlichen Satzinterpretation, Satzvorbereitung und Satzabarbeitung) auch Daten wie etwa Schleppfehler, Motorströme, Bahngeschwindigkeit oder Ein-/Ausgangssignale einer SPS zu erfassen. Das Tool ist in der Lage die messtechnisch erfassten Informationen beispielsweise in Form einer tabellarischen Anzeige, als NC-Satzanzeige und/oder als NC-Satzanalyse (z.B. Gannt-Diagramm) anzuzeigen. Ebenso ist eine Oszilloskopfunktion für die visuelle Darstellbarkeit aufgezeichneter Messwerte implementiert.

Mittels des Tools können Taktzeitanalysen, Optimierungen, Überwachungen und dergleichen durchgeführt werden. Neben den Signalen, die eine Taktzeitanalyse liefert, können ebenfalls Signalverknüpfungen durchgeführt werden und auch von den aufgenommenen Messwerten abgeleitete Signale (z.B. zeitliche Ableitung: d/dt) zur Anzeige gebracht werden. So könnte beispielsweise die Beschleunigungsabweichung aus der Soll- und Istposition einer Achse gebildet und visualisiert werden.

Folgende Funktionen/Signalverknüpfungen kann der Anwender beispielsweise durchführen lassen: $Sig = dSignal _ i \left(t\right) + dSignal _ j \left(t\right)$ $Sig = dSignal _ i \left(t\right) - dSignal _ j \left(t\right)$ $Sig = dSignal _ i \left(t\right) * dSignal _ j \left(t\right)$ $Sig = dSignal _ i \left(t\right) : dSignal _ j \left(t\right)$ $Sig = dSignal \left(t\right) / dt \left(und mehrfache Nutzung\right)$ $Sig = \int Signal \left(t\right) dt \left(und mehrfache Nutzung\right)$ $Sig \left(f\right) = FFT \left(Signal\left(t\right)\right)$ (Überführung eines Signals aus dem Zeitbereich in den Frequenzbereich)

Auf die resultierenden Signale können wiederum verschiedene mathematische Funktionen angewendet werden. Die Signale können in Querbeziehung zu anderen Datensätzen, wie dem Steuerprogramm oder dem Prozessergebnis, z.B. der Werkstückoberfläche, oder dem Motorstrom oder der Spindeldrehzahl und dergleichen gesetzt werden.

Die Einrichtung umfasst vorzugsweise Mittel zur Realisierung des Betriebes und/oder der Visualisierung unter Verwendung eines Datennetzwerkes, insbesondere eines Intranets und/oder des Internets. Damit kann eine Fernwartung, Fernanalyse, Fernoptimierung, Überwachung von Prozessen/Abläufen/Vorgängen und/oder beteiligten intelligenten Teilsystemen/Einrichtungskomponenten realisiert werden. Alle zuvor erwähnten Verwendungen wären somit aus der Ferne ausführbar.

Die nachfolgenden Figuren sind rein schematischer Natur. Die nachfolgenden Erläuterungen umfassen Details, welche mit Merkmalen aus der vorherigen Beschreibung und/oder den Ansprüchen frei kombiniert werden können.
Figur 1 zeigt schematisch die Architektur einer erfindungsgemäßen Einrichtung.
Figur 2 zeigt detaillierter die aus Figur 1 bekannte Anzeigevorrichtung.
Figur 3 zeigt das Auswahlmittel der erfindungsgemäßen Vorrichtung.

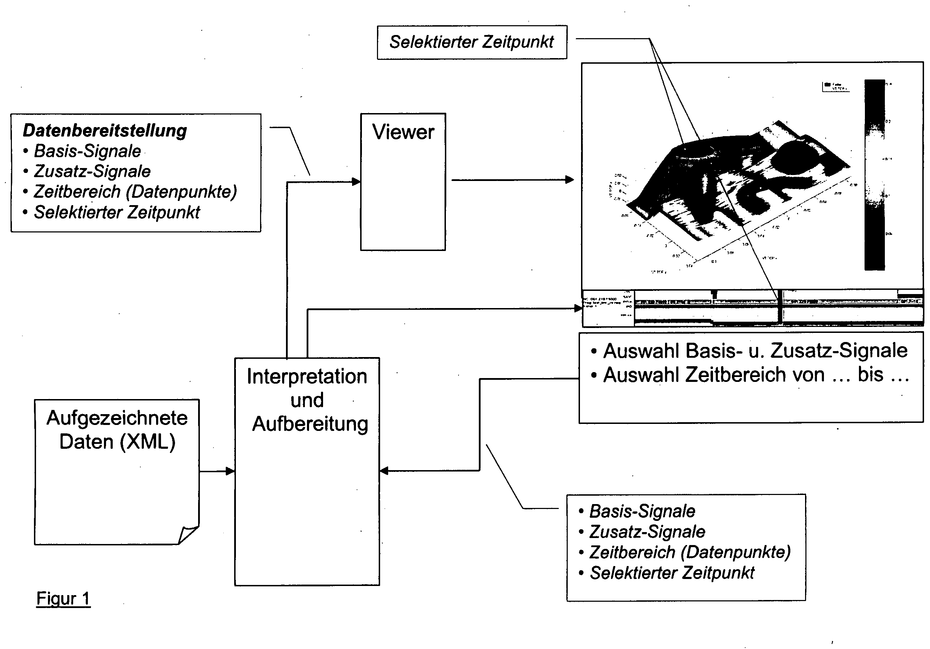

Die Figur 1 zeigt grob schematisch die Komponenten einer erfindungsgemäßen Einrichtung, beispielsweise einer Einrichtung zur Realisierung eines gesteuerten Ablaufes wie beispielsweise einer Bearbeitungsmaschine. Bei einer solchen Bearbeitungsmaschine kann es sich um eine Maschine zur Bearbeitung eines Werkstückes 11, insbesondere eine Werkzeugmaschine, handeln.

Die erfindungsgemäße Einrichtung ist unter anderem mit einem Anzeigemittel 12 ausgestattet, welches mehrere Teilbereiche 12a,b,c umfassen kann, die in sich wieder teilbar sein können. Zur Realisierung der erfindungsgemäßen Einrichtung ist ein Verarbeitungsmittel 13 zur Aufbereitung und Interpretation von Daten vorgesehen. Das Verarbeitungsmittel 13 ist mit dem Anzeigemittel 12 derart verbunden, dass aufbereitete bzw. interpretierte Daten zwischen Verarbeitungsmittel 13 und Anzeigemittel 12 übertragbar sind. Das Verarbeitungsmittel 13 hat ebenfalls Zugriff auf einen Datenpool 17, welcher beispielsweise aufgezeichnete Daten umfassen kann. Hierbei kann es sich zum Beispiel um aufgezeichnete Messdaten handeln, welche die Betriebsparameter der den intelligenten Teilsystemen zugeordneten Komponenten, wie etwa ein Späneförderer oder ein Aggregat zur Umwälzung des Kühlschmierstoffs, repräsentieren können.

Die Teilbereiche 12a,b,c dienen der besseren Übersicht und dienen hier zur Visualisierung des Werkstückes 12a, zur Visualisierung des Steuerprogramms 12b für eine Steuerung zum Betrieb einer Automatisierungseinrichtung und zur Visualisierung steuerungsinterner Vorgänge 12c. Mittels der in sich wieder aufteilbaren Teilbereiche 12a,b,c können bei Bedarf auch mehrere Steuerungsprogramme und/oder mehrere Werkstücke visualisiert werden. Beispielsweise können die Steuerprogramme mehrerer Steuerungskanäle einer Numerischen Steuerung, einer oder mehrerer SPS-Einheiten (z.B. zugehörige Schrittketten) oder anderer intelligenter Teilsysteme, wie beispielsweise eines Antriebs mit einer integrierten SPS, visualisiert werden.

Ebenso ist ein Auswahlmittel 18 vorgesehen. Das Auswahlmittel 18 dient zur Konfiguration des Anzeigemittels 12a,b,c bzw. des Verarbeitungsmittel 13 insofern, als die zu visualisierenden Informationen (Basissignale, Zusatzsignale, Zeitbereiche) auswählbar sind. Hierzu besteht eine Verbindung zwischen Verarbeitungsmittel 13 und Auswahlmittel 18. Die prozessrelevanten Datensätze, zwischen denen eine Querbeziehung hergestellt werden soll, sind mittels des Auswahlmittels 18 auswählbar. Teil des Auswahlmittels 18 könnte beispielsweise auch eine Zoomfunktion sein, mit deren Hilfe man bestimmte Datensätze detaillierter analysieren kann.

Mittels des Verarbeitungsmittels 13 wird unter Verwendung zumindest eines ersten und eines zweiten für den Prozessablauf charakteristischen Datensatzes eine Visualisierung beider Datensätze vorbereitet, so dass am Anzeigemittel 12a,b,c eine visuelle Querbeziehung 15,16 zwischen für den Prozessablauf relevanten Abschnitten der visualisierten Datensätze darstellbar ist. Ein erster Datensatz kann beispielsweise Daten zur grafischen (2- oder 3- dimensionalen) Darstellung eines Werkstückes 11 innerhalb des ersten Teilbereiches 12a des Anzeigemittels umfassen. Diese Daten können beispielsweise von einer virtuellen Maschine stammen, mittels derer in Verbindung mit einem Maschinensteuerprogramm zunächst ein virtuelles Werkstück 11 erzeugt wurde. Alternativ oder zusätzlich könnte es sich aber auch um Daten handeln, welche mittels der messtechnischen Erfassung eines realen Werkstückes 11 mittels eines Teilsystems erzeugt wurden, wobei das reale Werkstück 11 mittels des Steuerprogramms tatsächlich hergestellt wurde. Vorzugsweise, insbesondere auch aus Kostengründen, wird jedoch die auf der virtuellen Maschine beruhende Vorgehensweise verwendet. Ein zweiter Datensatz kann beispielsweise ein Maschinensteuerprogramm umfassen, welches für die Werkstückbearbeitungsvorgänge verantwortlich ist. Es handelt sich bei der Darstellung des Maschinensteuerprogramms insbesondere um die Visualisierung von DIN-Code für eine Numerische Steuerung, wobei im Rahmen der Visualisierung der Programmcode in Form von NC-Sätzen zumindest abschnittsweise innerhalb des zweiten Bereiches 12b des Anzeigemittels 12 visualisiert wird. Zusätzlich sind für den Programmcode relevante steuerungsinterne Informationen in dem Teilbereich 12c des Anzeigemittels 12 dargestellt. Auch Informationen bezüglich der zeitlichen Verarbeitungsdauer (Timing) der einzelnen Programmcodezeilen können dargestellt werden.

Erfindungsgemäß wird eine visuelle Querbeziehung 15,16 zwischen dem hier beispielhaft erwähnten Programmcodeabschnitt 15 für die Maschinensteuerung und der mittels dieses Programmcodeabschnittes 15 zu bearbeitenden Werkstückoberfläche 16 hergestellt. So könnte beispielsweise wie in 12b angedeutet mittels eines Cursors 15 durch das Steuerprogramm navigiert werden, zeitsynchron würde dann im anderen Teilbereich 12a des Anzeigemittels 12 der zugehörige Referenzpunkt 16 visualisiert (hier beispielsweise mittels eines schwarzen Punktes).

Mit dieser erfindungsgemäßen Einrichtung hat der Programmcodeentwickler, das Inbetriebnahmepersonal oder der Maschinenbetreiber die Möglichkeit, Programmcodeoptimierungen vorzunehmen und Fehlern und/oder Ungenauigkeiten am Werkstück, welche durch einen nicht optimierten oder fehlerhaften Programmcode oder fehlerhaft arbeitende Teilsysteme und/oder Komponenten (z.B. fehlerhafte Werkzeuglängenkorrektur) verursacht wurden, frühzeitig vorzubeugen. Dies kann im Vorfeld geschehen, bevor ein Werkstück tatsächlich hergestellt wurde. Gleiches kann auch während der Maschinen- oder Prozess-Inbetriebnahme an einer realen Maschine erfolgen oder immer wieder zur Nachjustierung des Prozesses bzw. zur Kompensation entsprechender Fehler der Maschine bzw. einzelner Teilsysteme und/oder Komponenten genutzt werden.

Alternativ zur Werkstückoberfläche oder alternativ zu Bahnbewegungen unter Verwendung der Achs-Sollpositionen im Interpolator in X-, Y- und Z-Richtung könnten auch andere Datensätze von anderen intelligenten Teilsystemen (die insbesondere über die gleiche Zeitbasis verfügen) mehrdimensional dargestellt werden, so dass zwischen diesen Datensätzen und zumindest einem Steuerprogramm eine Querbeziehung 15,16 herstellbar ist. Beispielsweise könnten interne Kommunikationsprotokolldaten, Positionsistdaten, Achs-Schleppfehler, Steuerungskanaldaten, Motorsoll- und -istströme, Geschwindigkeiten, Beschleunigungen von Bearbeitungsachsen/Spindelachsen oder von Maschinenkomponenten oder von Antriebskomponenten und dergleichen oder E/A-Zustände von an SPS-Einheiten angeschlossenen Komponenten und aus diesen Daten ableitbare oder auf sonstige Art und Weise berechenbare Daten bei der Visualisierung und/oder Herstellung von Querbeziehungen 15,16 berücksichtigt werden.

Auch Messgrößen oder Daten aus realen oder virtuellen Maschinenteilsystemen könnten berücksichtigt werden. Zur Erfassung dieser Messgrößen ist auf jedem intelligenten Teilsystem nach Möglichkeit ein erfindungsgemäßes Messmittel vorgesehen, welches mit dem Verarbeitungsmittel 13 zum Datenaustausch in Verbindung stehen kann (nicht gezeigt) und Daten austauschen kann. Ein Messmittel ist in der Lage, alle bereits oben genannten Messgrößen wie etwa Motorströme, Achsgeschwindigkeiten, Drehzahlen, Beschleunigungen, Schleppfehler, E/A-Zuständer der SPS, etc. zu erfassen und mit dem Dateninterpretations- und Aufbereitungsmittel 13 auszutauschen. Das Aufbereitungsmittel 13 ist in der Lage, unter Verwendung der aufgezeichneten Größen abgeleitete Größen zu berechnen oder auch komplexere Berechnungen durchzuführen, wie etwa den Energieverbrauch unter Verwendung der Größen Spannung und Strom oder die geometrische Formabweichung an Sollpositionen unter Zuhilfenahme des jeweiligen Achsschleppfehlers sowie des jeweiligen Oberflächenvektors.

Folgende Darstellungsmöglichkeiten im ersten Teilbereich 12a des Anzeigemittels 12 sind unter anderem denkbar:
2D- Diagramme (ein oder zwei Basissignale)
   - ein Messsignal abgetragen über die Zeit oder einem Basissignal (ähnlich eines Oszilloskops, auch mehrkanalig mit mehreren Messsignalen)
   - Konturdiagramme von Bahnbewegungen (z.B. in Verbindung mit der Erzeugung einer Werkstückoberfläche) mittels zweier Basissignale
   - ein Messsignal farblich gekennzeichnet eingeblendet über zwei Basissignale
3D-Diagramme (bis zu drei Basis-Signale)
   - Konturdiagramme von Bahnbewegungen (z.B. in Verbindung mit der Erzeugung einer Werkstückoberfläche) mittels dreier Basis-Signalen
   - bis zu zwei Messsignale, abgetragen über die Zeit oder einem Basissignal
4D-Diagramme (drei Basis-Signale)
   - zumindest ein Zusatzsignal, welches innerhalb eines 3D-Diagramms auf die Bahnbewegung (Werkstückoberfläche) vorzugsweise farblich gekennzeichnet eingeblendet wird (z.B. ein antriebsrelevantes Signal oder daraus ableitbare Größen, wie beispielsweise die verbrauchte elektrische Leistung)

Zeitlich synchron zu den zuvor genannten Darstellungen und/oder zum Steuerprogramm können weitere Darstellungsformen wie beispielsweise von Gannt-Diagramme, Tabellarischen Darstellungen, Balkendiagrammen, Oszilloskop-Darstellungen erfolgen bzw. eingeblendet werden.

Der Anwender der erfindungsgemäßen Einrichtung hat die Möglichkeit, einen Bereich oder einen Abschnitt an einer beispielsweise dreidimensional visualisierten Werkstückoberfläche manuell auszuwählen (z.B. grafisch durch Markierungen an einer zurückgelegten Bahn bzw. der an der Werkstückoberfläche). Entlang der am Anzeigemittel 12a angezeigten Konturen des Werkstückes 11 kann sich der Anwender mittels eines Auswahlmittels oder eines Zeiger/Cursors beispielsweise unter Verwendung der Cursortasten der Computertastatur oder einer Zeigevorrichtung (z.B. Mauszeiger, Trackball, etc.) bewegen. Im zweiten Teilbereich 12c wird derjenige Datensatz (z.B. NC-Satz) angezeigt, welcher nun einen Bezug zur oben erwähnten und beispielhaft aufgeführten Werkstückoberfläche hat.

Eine Zoom-Funktion steht dem Anwender ebenfalls zur Verfügung (nicht gezeigt). Innerhalb der beispielhaft erwähnten Werkstückoberfläche 11 kann somit ein Ausschnitt ausgewählt werden und in der dargestellten Größe verändert werden, so dass Details der Werkstückoberfläche 11 näher betrachtet werden können. In der gleichen Weise können auch Ausschnitte zumindest eines Steuerprogramms entsprechend den Erfordernissen detailliert analysiert werden kann. Denkbar wäre optional auch eine Kopplung zwischen beiden Zoomfunktionen, so dass sich diese gegenseitig beeinflussen.

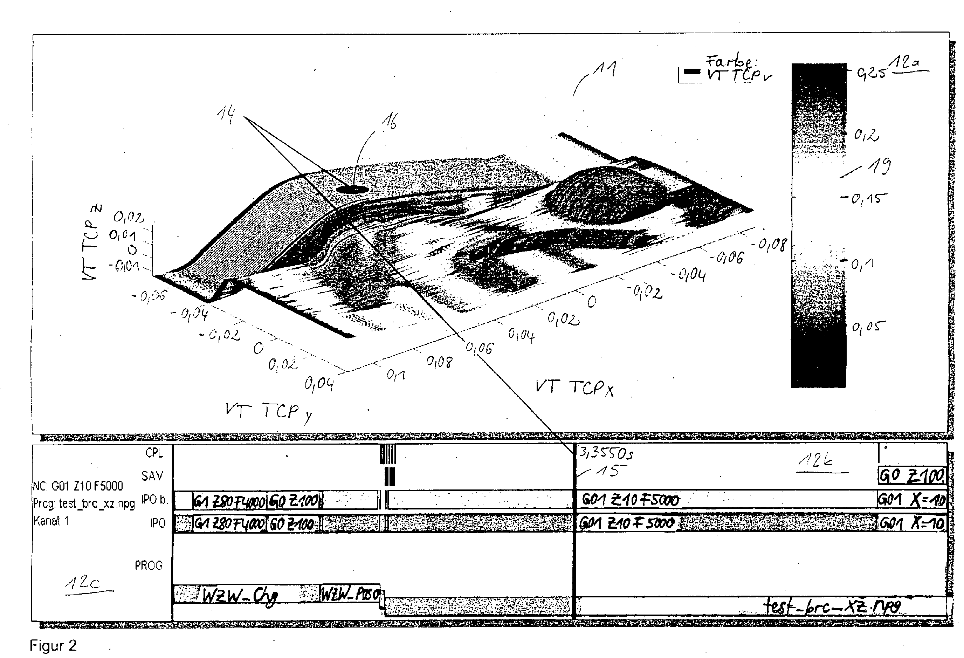

In Figur 2 ist beispielhaft etwas detaillierter aufgezeigt, wie eine Querbeziehung 15,16 zwischen dem Datensatz zur Visualisierung einer Werkstückoberfläche 11 und einem Programmcode unter Verwendung der Teilbereiche 12a,b des Anzeigemittels 12 dargestellt werden könnte.

Die unter Verwendung einer virtuellen und/oder realen Maschine und zumindest eines Steuerprogramms erstellten Datensätze werden zur Darstellung eines dreidimensionalen Bildes von der erfindungsgemäßen Einrichtung (z.B. Interpretation und Aufbereitung 13) bearbeitet und in dem ersten Bereich 12a des Anzeigemittels hier mittels dreier Signale (X/Y/Z-Achse) dreidimensional dargestellt.

Die für die technische Realisierung der Darstellung des Werkstückes 11 verwendeten drei Basis-Signale: X-Soll, Y-Soll und Z-Soll werden von den Bewegungen der Bearbeitungsachsen X,Y,Z auf der zugeordneten Steuerung bzw. dem zugehörigen Interpolator abgegriffen. Alternativ könnten anstelle dieser drei Basissignale auch beliebige andere Signale oder aus ihnen abgeleitete oder berechnete Größen verwendet werden, so dass anstelle des Werkstückes 11 beliebige 3D-Konturen dargestellt werden könnten. Auf diese Konturen könnte eine weitere vierte Größe farbig aufgeblendet werden. Beispielsweise wäre es denkbar, mit der 3D-Kontur von abgeleiteten Achsistpositionen, Achsistgeschwindigkeiten X', Y', und Z' oder Achsistbeschleunigungen X", Y", und Z" wahlweise eine weitere Größe, wie etwas das Ist-Drehmoment der Bearbeitungsspindel, farbig zu überlagern.

Mittels Zusatzsignalen können Oberflächenabschnitte, unabhängig aus welchen Basissignalen sie generiert werden, verschiedenfarbig eingeblendet werden (im Bild graue Schattierungen), wobei mittels jeder Farbe eine für den Betrachter relevante Information codiert quasi als vierte Dimension eingeblendet sein könnte. Bei dieser Codierung könnte es sich beispielsweise um die Darstellung beliebiger aufgezeichneter Signale und daraus abgeleitete bzw. berechnete Größen handeln, welche sich innerhalb eines bestimmten Toleranzbereiches bewegen dürfen. Mittels der Farben könnten somit ggf. durch die Maschinendynamik hervorgerufene Fehler oder Programmierfehler, Komponentenfehler, etc. gekennzeichnet und an denjenigen Stellen der Werkstückoberfläche sichtbar gemacht werden, an denen ein Signal einen entsprechenden (kritischen) Zustand eingenommen hat. Mittels des Farbcodebalkens 19 rechts im Bild könnte jeder Farbe (hier graue Schattierungen) ein bestimmter Toleranzbereich oder Dynamikbereich für das Signal / den Parameter zugeordnet werden, so dass der Anwender jeder Farbe schnell auch einen Zahlenwert zuordnen kann und einen raschen Überblick über das Ausmaß eventueller Abweichungen von vorgegebenen Sollwerten enthält.

Man könnte mittels dieser Informationen sofort erkennen, wenn gemessene Signale, oder daraus abgeleitete oder berechnete Größen, wie etwa der geometrische Fehler am Werkstück, einen vorgebbare Toleranzbereich überschreiten. Eine solche Überschreitung wäre auf eine fehlerhaft arbeitende Maschinenkomponente oder ein fehlerhaft arbeitendes Teilsystem zurückzuführen. Es kann nun mittels der Erfindung eine eindeutige Querbeziehung zwischen dem Zustand einer auswählbaren Maschinenkomponente oder dem Zustand eines auswählbaren Teilsystems zu einem bestimmten Zeitpunkt und der zu diesem Zeitpunkt erzeugten Bahn oder Werkstückoberfläche hergestellt werden. Beispielsweise könnte ein unzulässig hohes Moment der Spindel während einer Schlichtbearbeitung einen Fehler am Werkstück verursachen bzw. auf einen solchen hinweisen.

Die Basis- und Zusatzsignale sowie ggf. darzustellende Zeitbereiche wählt der Anwender unter Verwendung des Auswahlmittels 18 bequem aus.

Im unteren Bereich der Figur 2 ist ein Abschnitt 12b eines NC-Satzes gezeigt. Dieser Programmabschnitt 15 ist für die Realisierung des markierten Abschnittes 16 der Werkstückkontur 11 verantwortlich (oben im Bild), denn dieser Programmabschnitt 15 steuert die Spindeln der Maschine an, welche zur Bearbeitung des Werkstückes 11 genutzt werden.

Anstelle eines NC-Satzes könnte natürlich auch jeder andere Programmcode eines intelligenten Teilsystems, beispielsweise der Programmcode von Robotersteuerungen oder von speicherprogrammierbaren Steuerungen (SPS) eingeblendet und erfindungsgemäß visualisiert werden, so dass beispielsweise auch Querbeziehungen zwischen Roboterbewegungen und der hergestellten Werkstückoberfläche 11 oder eines zu biegenden oder zu montierenden Teils etc. herstellbar sind.

In diesem Beispiel zeigt z.B. ein bestimmter Abschnitt 16 an der Werkstückoberfläche eine Abweichung von den Sollabmessungen und ist mittels eines Punktes 16 markiert. Somit hat der Anwender sofort einen Bezug zum Steuerprogrammabschnitt12b, welches bei der Herstellung der markierten Werkstückkontur 11 abgearbeitet wird. Der Bearbeiter erkennt beispielsweise dass dem NC-Satz "G0 Z100" neben einigen aufgrund des in 12b gewählten Zeitausschnitts nicht sichtbaren NC-Sätzen (graue bzw. schwarze Teilbalken) der NC-Satz "G01 Z10 F5000" zeitlich folgt und dass während der Abarbeitung des letztgenannten NC-Satzes offensichtlich der markierte Abschnitt 16 an der Werkstückkontur entstanden ist. Die Einrichtung kennzeichnet dies visuell 15 im Teilbereich 12b des Anzeigemittels 12 mittels eines senkrechten Balkens.

Der Anwender erkennt mittels Telbereich 12c ebenfalls den Zustand der NC-Satzvorbereitung (SAV) und den Zustand des Interpolators (IPO). Der Anwender erkennt auch, ob zu dem Zeitpunkt, zu dem der relevante Werkstückabschnitt 16 mittels des NC-Satzes 15 bearbeitet wurde, eine Bewegung durch den IPO vorgegeben wurde oder nicht. Dies ermöglicht es, dem Anwender nicht nur für einen bestimmten Werkstückabschnitt 16 eine relevante Codezeile im Steuerprogramm (PROG) ausfindig zu machen, sondern auch die steuerungsinterne Abarbeitung des Programmcodes zu analysieren.

Während im Rahmen der Satzvorbereitung der CPL-Code (Customer Programming Language: eine an BASIC angelehnte Hochsprache) beispielsweise zur Berechnung von Konturanfangs- und Konturendpunkten aufgelöst und berechnet wird, errechnet der Interpolator die von den Werkzeugen tatsächlich abzufahrenden Zwischenpunkte. Tritt nun beispielsweise eine Verzögerung in der Satzvorbereitung, beispielsweise verursacht durch Datenspeicherzugriffe auf, so führt dies im Allgemeinen auch zu Verzögerungen bei der Interpolation. Diese Timinginformationen können ebenfalls im Anzeigemittelabschnitt 12b vorzugsweise mittels Balkencharts bzw. Gantt-Diagrammen dargestellt werden. Der Anwender hat damit die Möglichkeit, zusätzlich die zeitliche Abarbeitung des Programmcodes in der Steuerung zu optimieren bzw. zu beeinflussen. Dies kann Taktzeiten reduzieren oder den Prozess optimieren. Auf diese Weise könnten beispielsweise bei einer Laserbearbeitung eines Werkstückes unnötige Materialerwärmungen am Werkstück vermieden und der Bearbeitungsprozess beschleunigt werden.

Zusätzlich erfährt der Anwender aus dem Anzeigemittelabschnitt 12c, dass der abgearbeitete Programmcode in der Datei "test_brc_xz.npg" abgelegt ist. Dies ermöglicht ein schnelles Auffinden des Quellcodes in einem Dateisystem zum Debuggen.

Der Anwender hat vorzugsweise auch die Möglichkeit, das Steuerprogramm unter Verwendung eines Editors aus der Anzeige 12b unmittelbar heraus aufzurufen, abzuändern und abzuspeichern. Der Anwender kann sofort die Werkstückkontur 11 neu berechnen lassen, so dass die Auswirkungen der Änderungen zeitnah überprüft werden können. Hier übernimmt dann der Editor den Zugriff auf die Programmdatei voll automatisch. Diese Lösung ermöglicht somit dem Anwender ein schnelles Handeln, falls Optimierungsbedarf am Steuerprogramm besteht.

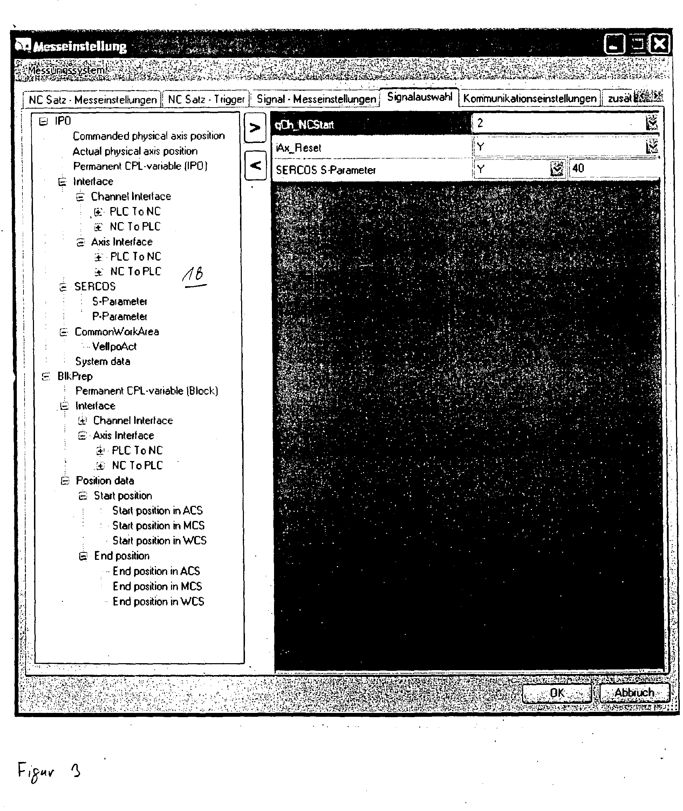

Figur 3 zeigt wie mittels des erfindungsgemäßen Auswahlmittels 18 die Datensätze zur Auswahl grafisch strukturiert werden. Die Daten werden in Form eines Baums (unter Berücksichtigung der vorhandnen Abhängigkeiten) hierarchisch gegliedert. Mittels beispielsweise sogenannter Pull-Down-Menüs können die Basis- und Zusatzsignale leicht ausgewählt werden. Diese hierarchische Struktur kann auch mit anderen Darstellungen oder Grafiken gekoppelt werden, beispielsweise mit der Bedienoberfläche einer Steuerung oder einer Bearbeitungsmaschine.

## Patentansprüche

1. Verfahren zur Überwachung und/oder zur Analyse zumindest eines auf einer automatisierten Einrichtung ablaufenden Prozesses,
wobei von der Einrichtung zumindest ein am Prozess beteiligtes intelligentes Teilsystem in Form einer Steuerung umfasst ist, wobei ein auf der Steuerung ablauffähiges Steuerprogramm einen ersten Datensatz bildet, wobei es sich bei dem Steuerprogramm um Programmcode für eine Numerische Steuerung oder eine Bewegungssteuerung oder eine SPS oder eine Robotersteuerung handelt,
wobei zumindest ein zweiter Datensatz Daten zur Visualisierung des Prozessergebnisses umfasst, mittels welcher Daten das Prozessergebnis an einem Anzeigemittel visualisiert wird, wobei der zweite Datensatz auf einer Prozess-Simulation unter Verwendung einer virtuellen Einrichtung zur Ausführung des Prozesses oder auf Messungen unter Verwendung einer realen Einrichtung zur Ausführung des Prozesses basiert, **dadurch gekennzeichnet,**
**dass**
unter Verwendung zumindest des ersten und des zweiten Datensatzes eine Visualisierung einer Querbeziehung zwischen dem ersten und dem zweiten Datensatz mittels des Anzeigemittels derart realisiert wird, dass eine visuelle Darstellung der Querbeziehung zwischen für den Prozess relevanten Abschnitten der Datensätze hergestellt wird,
**dass** im Rahmen der Visualisierung der Programmcode zumindest abschnittsweise visualisiert wird,
**dass**
die Visualisierung unter Verwendung von zumindest drei Basissignalen erfolgt, welche den Koordinatenachsen zugeordnet werden und gemeinsam das Prozessergebnis in Form einer Kontur einer mehrdimensionalen Oberfläche repräsentieren, und
**dass** die Visualisierung auch unter Verwendung zumindest eines Zusatzsignals erfolgt, welches zur visuellen Kennzeichnung eines Abschnittes innerhalb der mehrdimensionalen Kontur oder zur visuellen Kennzeichnung eines Abschnittes am Anzeigemittel dient und von zumindest einem weiteren Datensatz repräsentiert wird.

2. Verfahren nach Anspruch 1, wobei die Steuerung zusätzlich oder alternativ eine virtuelle Einrichtung steuert und Datensätze mit der virtuellen Einrichtung austauscht, welche Datensätze auch bei der Visualisierung berücksichtigt werden können.

3. Verfahren nach Anspruch 1 oder 2, wobei bezüglich des Steuerprogramms relevante und mittels einer Editiereinrichtung erfassbare Änderungen des Steuerprogramms derart verarbeitet werden, dass diese Änderungen unmittelbar auf den Prozess Einfluss nehmen können.

4. Verfahren nach einem der vorhergehenden Ansprüche, wobei bei der Visualisierung zu berücksichtigende Datensätze hierarchisch gegliedert und zur Auswahl für einen Benutzer visualisierbar sind.

5. Verfahren nach einem der vorhergehenden Ansprüche, wobei zumindest ein Datensatz mittels eines Messmittels ermittelt und mittels einer Datensammeleinrichtung gesammelt wird.

6. Verfahren nach Anspruch 5, wobei der mittels des Messmittels erfasste Datensatz Messgrößen und/oder Parameter umfasst.

7. Verfahren nach Anspruch 6, wobei der mittels des Messmittels erfasste Datensatz steuerungsspezifische Daten, Motorströme, Achsdaten, Drehzahlen, Beschleunigungen, Schleppfehler, Energieverbrauchsdaten, Positionsdaten, Kommunikationsprotokolldaten, Steuerungskanaldaten, Geschwindigkeitsdaten, Beschleunigungsdaten oder daraus ableitbare Daten umfasst.

8. Verfahren nach einem der vorhergehenden Ansprüche, wobei auch eine Einrichtungskomponente umfasst ist und zumindest ein Datensatz den Zustand der Einrichtungskomponente charakterisiert.

9. Verfahren gemäß einem der vorhergehenden Ansprüche, wobei ein Auswahlmittel verwendet wird, welches zur Auswahl des Zusatzsignals aus einer Vielzahl von Zusatzsignalen dient und mehrere Zusatzsignale mittels des Auswahlmittels hierarchisch gegliedert werden können.

10. Verfahren gemäß einem der vorhergehenden Ansprüche, wobei das Verfahren unter Verwendung eines Datennetzwerkes, insbesondere eines Intranets und/oder des Internets, durchgeführt wird.

11. Verwendung des Verfahrens gemäß einem der vorhergehenden Ansprüche für einen oder mehrere der folgenden Zwecke:
Überwachung der Fertigungsgenauigkeit der Einrichtung;
Taktzeitüberwachung und/oder Taktzeitanalyse;
Energieverbrauchüberwachung und/oder Energieverbrauchanalyse;
Optimierung und/oder Überwachung zumindest eines auf der Einrichtung ablaufenden der Prozesses;
Überwachung und/oder Beurteilung des Einrichtungszustandes;
Beurteilung des Zustandes von zumindest einem Teilsystem der Einrichtung;
Beurteilung des Zustandes von zumindest einer Teilkomponente der Einrichtung.

## Claims

1. Method for monitoring and/or analysing at least one process running on an automated device,
wherein at least one intelligent subsystem which is involved in the process and is in the form of a controller is included in the device, wherein a control programme which can be executed on the controller forms a first data record, wherein the control program is program code for a numerical controller or a motion controller or a PLC or a robot controller, wherein at least one second data record comprises data for visualizing the process result, by means of which data the process result is visualized on a display means, wherein the second data record is based on a process simulation using a virtual device for carrying out the process or is based on measurements using a real device for carrying out the process,
**characterized in that**
a cross-link between the first and the second data record is visualized by means of the display means using at least the first and the second data record in such a manner that a visual representation of the cross-link between sections of the data records which are relevant to the process is produced,
**in that** the program code is visualized at least in sections during the visualization,
**in that** the visualization is carried out using at least three basic signals which are assigned to the coordinate axes and together represent the process result in the form of a contour of a multi-dimensional surface, and **in that** the visualization is also carried out using at least one additional signal which is used to visually indicate a section within the multi-dimensional contour or to visually indicate a section on the display means and is represented by at least one further data record.

2. Method according to Claim 1, wherein the controller additionally or alternatively controls a virtual device and interchanges data records with the virtual device, which data records can also be taken into account during the visualization.

3. Method according to Claim 1 or 2, wherein changes in the control program which are relevant to the control program and can be captured by means of an editing device are processed in such a manner that these changes can immediately influence the process.

4. Method according to one of the preceding claims, wherein data records to be taken into account during the visualization are hierarchically organized and can be visualized for a user for selection.

5. Method according to one of the preceding claims, wherein at least one data record is determined by means of a measurement means and is collected by means of a data collection device.

6. Method according to Claim 5, wherein the data record captured by means of the measurement means comprises measurement variables and/or parameters.

7. Method according to Claim 6, wherein the data record captured by means of the measurement means comprises control-specific data, motor currents, axis data, speeds, accelerations, contouring errors, energy consumption data, position data, communication protocol data, control channel data, speed data, acceleration data or data which can be derived therefrom.

8. Method according to one of the preceding claims, wherein a device component is also included and at least one data record characterizes the state of the device component.

9. Method according to one of the preceding claims, wherein use is made of a selection means which is used to select the additional signal from a multiplicity of additional signals, and a plurality of additional signals can be hierarchically organized by means of the selection means.

10. Method according to one of the preceding claims, wherein the method is carried out using a data network, in particular an intranet and/or the Internet.

11. Use of the method according to one of the preceding claims for one or more of the following purposes:
monitoring of the production accuracy of the device;
clock time monitoring and/or clock time analysis;
energy consumption monitoring and/or energy consumption analysis;
optimization and/or monitoring of at least one process running on the device;
monitoring and/or assessment of the device state;
assessment of the state of at least one subsystem of the device;
assessment of the state of at least one subcomponent of the device.

## Revendications

1. Procédé de surveillance et/ou d'analyse d'au moins un processus exécuté sur un dispositif automatisé,
le dispositif comprenant au moins un sous-système intelligent participant au processus sous la forme d'une unité de commande, dans lequel un programme de commande exécutable sur l'unité de commande forme un premier ensemble de données, le programme de commande étant du code programme pour une commande numérique ou une commande de mouvement ou un PLC ou une commande de robot, dans lequel au moins un deuxième ensemble de données comprend des données pour visualiser le résultat de processus, lesdites données permettant de visualiser le résultat de processus sur un moyen d'affichage, le deuxième ensemble de données étant basé sur une simulation de processus en utilisant un dispositif virtuel pour exécuter le processus ou sur des mesures en utilisant un dispositif réel pour exécuter le processus,
**caractérisé**
**en ce qu'**en utilisant au moins le premier et le deuxième ensemble de données, une visualisation d'une relation croisée entre le premier et le deuxième ensemble de données est réalisée au moyen du moyen d'affichage de façon à établir une représentation visuelle de la relation croisée entre des sections des ensembles de données pertinentes pour le processus,
**en ce que** dans le cadre de la visualisation, le code programme est visualisé au moins par sections,
**en ce que** la visualisation est effectuée en utilisant au moins trois signaux de base qui sont associés à des axes de coordonnées et représentent ensemble le résultat de processus sous la forme d'un contour d'une surface multidimensionnelle, et
**en ce que** la visualisation est effectuée également en utilisant au moins un signal complémentaire qui sert à identifier visuellement une section à l'intérieur du contour multidimensionnel ou à identifier visuellement une section sur le moyen d'affichage et qui est représenté par au moins un ensemble de données supplémentaire.

2. Procédé selon la revendication 1, dans lequel l'unité de commande commande en plus ou en variante un dispositif virtuel et échange des ensembles de données avec le dispositif virtuel qui peuvent également être pris en compte pour la visualisation.

3. Procédé selon la revendication 1 ou 2, dans lequel concernant le programme de commande et au moyen d'un dispositif d'édition, des modifications décelables du programme de commande sont traitées de telle sorte que ces modifications peuvent influencer le processus directement.

4. Procédé selon l'une quelconque des revendications précédentes, dans lequel des ensembles de données à prendre en compte pour la visualisation sont hiérarchisés et peuvent être visualisés pour une sélection pour un utilisateur.

5. Procédé selon l'une quelconque des revendications précédentes, dans lequel au moins un ensemble de données est déterminé au moyen d'un moyen de mesure et est collecté au moyen d'un dispositif de collecte de données.

6. Procédé selon la revendication 5, dans lequel l'ensemble de données détecté au moyen du moyen de mesure comprend des grandeurs mesurées et/ou des paramètres.

7. Procédé selon la revendication 6, dans lequel l'ensemble de données détecté au moyen du moyen de mesure comprend des données spécifiques à l'unité de commande, des courants de moteur, des données d'axes, des vitesses de rotation, des accélérations, des erreurs de poursuite, des données de consommation d'énergie, des données de position, des données de protocole de communication, des données de canal de commande, des données de vitesse, des données d'accélération, ou des données pouvant être dérivées de celles-ci.

8. Procédé selon l'une quelconque des revendications précédentes, comprenant également un composant de dispositif, et au moins un ensemble de données caractérisant l'état du composant de dispositif.

9. Procédé selon l'une quelconque des revendications précédentes, dans lequel un moyen de sélection est utilisé qui sert à sélectionner le signal complémentaire parmi une pluralité de signaux complémentaires, et plusieurs signaux complémentaires peuvent être hiérarchisés au moyen du moyen de sélection.

10. Procédé selon l'une quelconque des revendications précédentes, dans lequel le procédé est exécuté en utilisant un réseau de données, en particulier un intranet et/ou l'internet.

11. Utilisation du procédé selon l'une quelconque des revendications précédentes pour un ou plusieurs des usages suivants :
surveillance de la précision de fabrication du dispositif ;
surveillance de temps de cycle et/ou analyse de temps de cycle ;
surveillance de consommation d'énergie et/ou analyse de consommation d'énergie ;
optimisation et/ou surveillance d'au moins un processus exécuté sur le dispositif ;
surveillance et/ou évaluation de l'état de dispositif ;
évaluation de l'état d'au moins un sous-système du dispositif ;
évaluation de l'état d'au moins un sous-composant du dispositif.
